# EUROPÄISCHE PATENTSCHRIFT

(11) **EP 3 026 229 B1**
(45) Veröffentlichungstag und Bekanntmachung des Hinweises auf die Patenterteilung: **09.01.2019**
(21) Anmeldenummer: 15192820.7
(22) Anmeldetag: 03.11.2015
(51) Int. Cl.: F01D 25/26, F02C 6/12, F02B 37/00, F01N 13/10, F02B 37/02

(54) **TURBINENGEHÄUSE FÜR EINEN ABGASTURBOLADER**
TURBINE HOUSING FOR A TURBOCHARGER
BOITIER DE TURBINE POUR UN TURBO-COMPRESSEUR

(30) Priorität: 11.11.2014 DE 102014116445
(43) Veröffentlichungstag der Anmeldung: 01.06.2016
(73) Patentinhaber: Benteler Automobiltechnik GmbH, 33102 Paderborn (DE)
(72) Erfinder: Grußmann, Elmar, 33184 Altenbeken-Buke (DE)
(74) Vertreter: Griepenstroh, Jörg

(56) Entgegenhaltungen:
- EP-A2- 2 299 087
- DE-A1-102008 032 492
- DE-A1-102008 061 687
- DE-A1-102013 200 666
- DIRK SELLMER: "Neue Werkstoffe - Herausforderung für die wirtschaftliche Bearbeitung", WIENER PRODUKTIONSTECHNIK KONGRESS 2014: INDUSTRIE 4.0 - DIE INTELLIGENTE FABRIK DER ZUKUNFT, 8. Mai 2014 (2014-05-08), XP055268498, Wien

## Beschreibung

Die Erfindung betrifft ein Turbinengehäuse für einen Abgasturbolader gemäß den Merkmalen im Oberbegriff von Patentanspruch 1.

Abgasturbolader erhöhen durch Verdichtung der zur Verbrennung notwendigen Luft den Luftdurchsatz eines Motors. Durch den Einsatz von Abgasturboladern lassen sich im Vergleich zu Saugmotoren bei identischem Hubraum Leistung, Drehmoment und auch der Wirkungsgrad steigern. Der Abgasturbolader besteht aus einer Turbine und einem Verdichter, die auf einer gemeinsamen Welle montiert und statisch miteinander verbunden sind. Die Turbine bzw. das Turbinenrad wird durch den heißen Abgasstrom angetrieben. Das Verdichterrad wird durch die statische Verbindung ebenfalls gedreht und verdichtet die einströmende Frischluft. Die Temperatur der verdichteten Luft wird durch einen Ladeluftkühler abgekühlt, um das Volumen zu verringern und so mehr Luft bzw. mehr Sauerstoff in den Brennraum führen zu können. Durch den Einsatz von Abgasturboladern wird nicht nur eine Leistungssteigerung erzielt, sondern in erster Linie auch eine Energieersparnis und Emissionsminderung erreicht.

Durch die DE 100 22 052 A1 zählt ein Turbinengehäuse für einen Abgasturbolader zum Stand der Technik. Hier wird die Entkopplung von abgasführenden Bauteilen und tragenden bzw. dichtenden Außenstrukturen vorgeschlagen. Das Laufrad- bzw. Innengehäuse ist aus zwei Halbschalen zusammengesetzt und von einem Außengehäuse umgeben, wobei zwischen den beiden Gehäusen ein Luftspalt besteht. Dieser Luftspalt wirkt wärmeisolierend und reduziert somit die Wärmeabstrahlung. Mit dem Laufradgehäuse und dem Außengehäuse ist ein Lagerflansch verschweißt.

Auch bei dem aus der DE 10 2009 025 054 A1 bekannten Turbinengehäuse befindet sich ein Innengehäuse in einem Außengehäuse. Das Innengehäuse ist aus zwei Blechschalen gebildet, die am Außenumfang miteinander verschweißt sind. Das Außengehäuse ist sowohl mit einem Lagerflansch als auch mit einem Auslassflansch verschweißt.

Einen ähnlichen Aufbau des Turbinengehäuses zeigt die DE 10 2010 021 114 A1. Sowohl das Außengehäuse als auch das Innengehäuse sind aus zwei Halbschalen zusammengesetzt. Das Außengehäuse ist mit einem Lagerflansch stoffschlüssig verbunden. Das Innengehäuse ist formschlüssig mit dem Lagerflansch gekoppelt.

Ein solcher Aufbau eines Turbinengehäuses geht des Weiteren aus der EP 2 299 087 A2 hervor.

Die DE 10 2008 032 492 A1 offenbart einen Abgasturbolader für eine Brennkraftmaschine mit einem Turbinengehäuse, welches zumindest einen mit einer Abgasflut eines Abgastrakts der Brennkraftmaschine koppelbaren Spiralkanal und einen Stromab des zumindest einen Spiralkanals angeordneten Aufnahmeraum umfasst. Das Turbinengehäuse weist ein den Spiralkanal umfassendes Teilgehäuse auf. Am Teilgehäuse ist ein Gehäusemodul festgelegt. In dem Lagegehäuse ist eine Welle für das Turbinenrad gelagert. Das Gehäusemodul und das Lagergehäuse weisen miteinander korrespondierende Anschlussflansche auf und sind mittels eines Spannbands oder einer Schraubverbindung aneinander festgelegt. Ein erster Wärmeausdehnungskoeffizient eines Materials des Gehäusemoduls ist größer als ein zweiter Wärmeausdehnungskoeffizient eines zweiten Materials des Teilgehäuses und/oder einer Zwischenwand des Teilgehäuses. Hierdurch soll im Betrieb eine Ausdehnung des Gehäusesmoduls gegenüber dem Teilgehäuse erreicht werden, um so eine Abdichtung herbeizuführen.

Im Umfang der DE 10 2008 047 448 A1 wird ein Abgasturbolader offenbart mit einem Turbinengehäuse sowie mit einem Teilkrümmer, der mit dem Turbinengehäuse verbunden ist, wobei das Turbinengehäuse und der Teilkrümmer als ein einstückiges Gussteil ausgebildet sind. Eine Alternative sieht vor, dass das Turbinengehäuse und der Teilkrümmer als separate Gussteile ausgebildet sind, die nach der gusstechnischen Herstellung miteinander verbindbar sind. Die hier vorgeschlagenen Maßnahmen sollen dem Umstand Rechnung tragen, dass die Verbindung zwischen dem dünnwandigen luftspaltisolierten Krümmer und dem vergleichsweisen dickwandigen Gussturbinengehäuse problematisch ist.

Wie bereits einleitend ausgeführt, wird ein Abgasturbolader von den Motorabgasen angetrieben. Diese werden mit hoher Geschwindigkeit und hohen Temperaturen von teilweise über 1.000°C auf die Turbinenschaufeln bzw. das Turbinenrad geleitet. Dementsprechend unterliegt der Turbolader während des Betriebes hohen mechanischen und insbesondere höchsten thermischen Belastungen. Wegen der hohen thermischen Belastungen wird das Innengehäuse häufig aus Gusswerkstoffen einstückig ausgeführt. Das Außengehäuse besteht in der Regel aus umgeformten Blechschalen. Diese sind üblicherweise über eine Schweißverbindung mit dem Lagerflansch verschweißt, welcher zur Befestigung des Abgasturboladers an einem Lagergehäuse eines Turbinenrades dient. Während das Lagergehäuse zur Aufrechterhaltung der Lagerung gekühlt wird, und somit auch der Lagerflansch durch seinen direkten Kontakt mit dem Lagergehäuse gut gekühlt ist, wird eine erhebliche Wärmemenge über das Außengehäuse in den Lagerflansch eingetragen. Die Stelle des höchsten Temperaturgradienten innerhalb des Lagerflansches liegt in der Nähe der Fügelinie zur Blechstruktur des Außengehäuses bzw. Innengehäuses des Abgasturboladers. Der turbinenradseitige Lagerbereich ist folglich hoch belastet. Durch die Temperaturwechsel im Betrieb resultieren Biegemomente im Bereich der Anbindung zwischen dem Lagerflansch und der Außenschale, was sich nachteilig auf die Dauerfestigkeit auswirken kann.

Der Erfindung liegt daher ausgehend vom Stand der Technik die Aufgabe zugrunde, die thermische Dauerfestigkeit eines Turbinengehäuses, insbesondere im Anbindungsbereich zwischen Lagerflansch und Außenschale, zu verbessern.

Die Lösung dieser Aufgabe besteht in einem Turbinengehäuse mit den Merkmalen von Anspruch 1.

Vorteilhafte Ausgestaltungen und Weiterbildungen des erfindungsgemäßen Turbinengehäuses sind Gegenstand der abhängigen Ansprüche 2 bis 7.

Das Turbinengehäuse eines Abgasturboladers umfasst ein Außengehäuse und ein Innengehäuse sowie einen Lagerflansch. Das Außengehäuse ist mit dem Lagerflansch gefügt, insbesondere stoffschlüssig gefügt mittels einer Schweiß- oder Lötverbindung. Erfindungsgemäß umfasst das Innengehäuse zumindest ein erstes Schalenbauteil und ein zweites Schalenbauteil. Das erste Schalenbauteil besteht aus einem Stahlgusswerkstoff erster Art und das zweite Schalenbauteil besteht aus einem Stahlgusswerkstoff zweiter Art. Mithin bestehen das erste Schalenbauteil und das zweite Schalenbauteil aus voneinander verschiedenen Stahlgusswerkstoffen. Die beiden Schalenbauteile sind miteinander gefügt.

Das Innengehäuse ist in einer quer zur Längsachse des Turbinengehäuses ausgerichteten Querebene in zwei separate Schalenbauteile aufgeteilt. Durch diese Maßnahme ist es möglich, die im Betrieb auftretenden Belastungen durch eine geeignete Werkstoffwahl zu kompensieren. Hierdurch wird die thermische Dauerfestigkeit des Turbinengehäuses erhöht. Erfindungsgemäß werden für die hochbelasteten Bauteilbereiche Werkstoffe eingesetzt, die eine gesteigerte bzw. höhere thermische und dynamische Festigkeit aufweisen. Da diese Werkstoffe relativ teuer sind, insbesondere aufgrund ihrer höheren Legierungsgehalte an Nickel, Niob, Titan oder auch Wolfram, werden nur der bzw. die hochbelasteten Bereiche des Innengehäuses aus diesen Werkstoffen ausgeführt. Für die weniger belasteten Bereiche des Innengehäuses ist der Einsatz von niedriger legierten Stahlgusswerkstoffen möglich. Die beiden Schalenbauteile werden durch einen stoffschlüssigen Fügeprozess, insbesondere einem Laser- oder Lötprozess, nach einer vorhergehenden mechanischen Bearbeitung der Trennebene verbunden. Bei der Werkstoffwahl sollen vorrangig Materialkombinationen austenitisch/austenitisch oder ferritisch/ferritisch gewählt werden. Hierdurch können nachteilige Auswirkungen im Bereich der Fügung durch unterschiedliche Ausdehnungskoeffizienten entgegen gewirkt werden.

Durch die belastungsoptimierte Material- bzw. Werkstoffauswahl und Kombination können die Bauteilkosten reduziert werden. Verunreinigungen bzw. Oberflächenfehler der Innenflächen können besser detektiert werden, da die Schalenbauteile innen und außen inspiziert bzw. kontrolliert werden können. Hierdurch werden die Ausschusskosten verringert. Gleiches gilt für Schäden an den Turboladern als solches. Schließlich ist auch eine Reduzierung der Bauteiltoleranzen durch einen nachgeschalteten Kalibrierprozess möglich.

Ein Aspekt der Erfindung sieht vor, dass der Lagerflansch materialeinheitlich einstückiger Bestandteil des ersten Schalenbauteils ist. Der Lagerflansch geht in die Wand des ersten Schalenbauteils über. Hierbei reduziert sich der dickwandige Teil des Lagerflanschs in dem gehäuseseitigen Wandabschnitt des ersten Schalenbauteils.

Das Innengehäuse ist in Längsrichtung geteilt. Die beiden Schalenbauteile des Innengehäuses sind in einer quer zur Längsachse des Turbinengehäuses ausgerichteten Querebene aneinander gesetzt und über eine am Außenumfang des Innengehäuses umlaufende Fügenaht miteinander verbunden.

Eine vorteilhafte Ausgestaltung sieht in diesem Zusammenhang vor, dass der Lagerflansch einen Stutzenabschnitt aufweist mit einer innenliegenden Lageraufnahme.

Das Außengehäuse ist mit dem Lagerflansch gefügt. Hierzu ist am Lagerflansch ein außenseitig umlaufender Steg vorgesehen, über welchen das Außengehäuse mit dem Lagerflansch gefügt ist. Unmittelbar benachbart zum Steg ist eine Nut ausgebildet, in welche das Außengehäuse eingreift. Das Außengehäuse selber ist aus Blechschalen gebildet. Zweckmäßigerweise besteht das Außengehäuse aus einer Oberschale und einer Unterschale, die einander gegenüberliegend in die Nut eingreifen.

Für das erste Schalenbauteil und das zweite Schalenbauteil kommen hitzebeständige Stahlgusswerkstoffe zur Anwendung. Sowohl der Stahlgusswerkstoff des ersten Schalenbauteils als auch der Stahlgusswerkstoff des zweiten Schalenbauteils weisen als Legierungsbestandteil Nickel auf. Der Nickelanteil im Stahlgusswerkstoff des ersten Schalenbauteils ist deutlich höher als der Nickelanteil im Stahlgusswerkstoff des zweiten Schalenbauteils. Das Verhältnis des Nickelanteils im ersten Schalenbauteil zum Nickelanteil im zweiten Schalenbauteil ist zwischen 1,5:1 und 15:1 bemessen. Mit anderen Worten weist der Stahlgusswerkstoff des zweiten Schalenbauteils einen deutlich geringeren Nickelanteil auf als das erste Schalenbauteil. Dementsprechend ist der Stahlgusswerkstoff des zweiten Schalenbauteils erheblich kostengünstiger als der Stahlgusswerkstoff des ersten Schalenbauteils.

Die Längenausdehnungskoeffizienten der beiden Stahlgusswerkstoffe sollten einander entsprechen. Insbesondere im Bereich der Betriebstemperaturen ist der Unterschied in den Längenausdehnungskoeffizienten der beiden Stahlgusswerkstoffe so gering, dass die Belastung im Bereich der Fügung zwischen den beiden Schalenbauteilen aufgrund von unterschiedlichen Ausdehnungskoeffizienten möglichst gering ist. Insbesondere ist der Längenausdehnungskoeffizient des Stahlgusswerkstoffes des ersten Schalenbauteils gemessen bei einer Temperatur von 800°C zwischen 1 % und 10 % geringer als der Längenausdehnungskoeffizient des Stahlgusswerkstoffes des zweiten Schalenbauteils. Die Angaben zum Längenausdehnungskoeffizienten beziehen sich auf eine Ermittlung gemäß der Norm EN10295.

Vorzugsweise kommt für das erste Schalenbauteil der hitzebeständige Stahlguss GX40NiCrSiNb38-19 mit der Werkstoffkennnummer 1.4849 zur Anwendung. Das zweite Schalenbauteil besteht vorzugsweise aus dem hitzebeständigen Stahlguss GX40CrNiSi25-12 mit Werkstoffkennnummer 1.4837. Der Stahlguss Nr. 1.4849 weist einen Nickelanteil zwischen 36,0 % und 39,0 % auf. Der Stahlguss Nr. 1.4837 weist einen Nickelanteil zwischen 11,0 % und 14 % auf. Demzufolge ist der Nickelanteil von 36 % im ersten Schalenbauteil auf 11 % im zweiten Schalenbauteil reduziert. Auch weist der Werkstoff Nr. 1.4849 einen Niobanteil zwischen 1,20 % bis 1,80 % auf, wohingegen der Stahlguss Nr. 1.4837 niobfrei ist bzw. keinen nachweisbaren Niobanteil enthält.

Eine weitere vorteilhafte Werkstoffkombination für das erste Schalenbauteil und das zweite Schalenbauteil besteht darin, dass das erste Schalenbauteil aus dem hitzebeständigen Stahlguss GX40CrNiSi25-20 mit der Werkstoffkennnummer 1.4848 besteht, wohingegen das zweite Schalenbauteil wie zuvor aus dem hitzebeständigen Stahlguss GX40CrNiSi25-12 (Nr. 1.4837) ausgeführt ist. Der Stahlguss Nr. 1.4848 weist einen Nickelanteil zwischen 19,0 % und 22,0 % auf. Demgegenüber ist der Nickelanteil im Werkstoff des zweiten Schalenbauteils geringer und liegt zwischen 5 % und 11 % unter dem Nickelanteil im ersten Schalenbauteil.

Die Erfindung ist nachfolgend anhand eines in den Zeichnungen dargestellten Ausführungsbeispiels näher beschrieben. Es zeigen:
- Figur 1: in perspektivischer Darstellungsweise einen Abgaskrümmer einer Brennkraftmaschine mit angeschlossenem Turbinengehäuse eines nachgeschalteten Abgasturboladers;
- Figur 2: die Darstellung gemäß der Figur 1 in einer Ansicht;
- Figur 3: einen Schnitt durch das Turbinengehäuse und
- Figur 4: einen vergrößerten Ausschnitt aus der Darstellung des Turbinengehäuses von Figur 3.

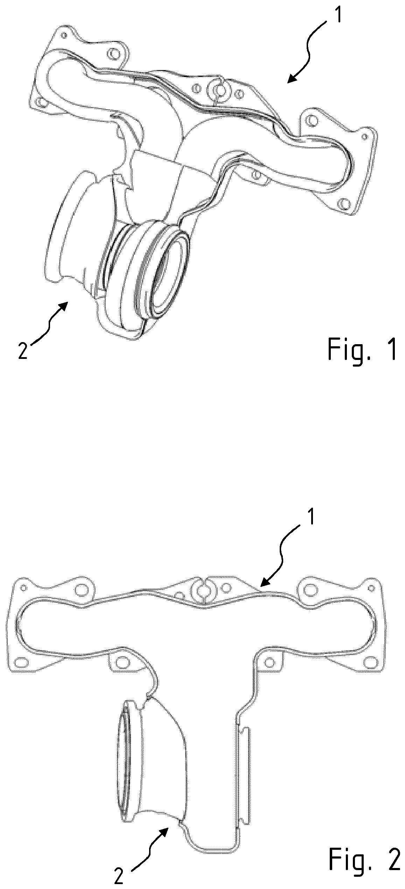

Die Figuren 1 und 2 zeigen einen Abgaskrümmer 1 einer Brennkraftmaschine mit einem Turbinengehäuse 2 eines nachgeschalteten Abgasturboladers.

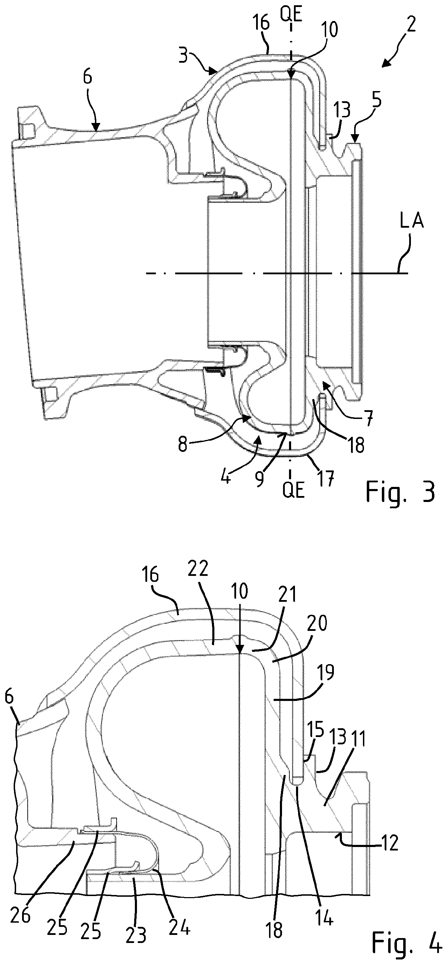

Das Turbinengehäuse 2 ist näher anhand der Figuren 3 und 4 erläutert.

Das Turbinengehäuse 2 umfasst ein Außengehäuse 3 und ein Innengehäuse 4. Ferner ist ein Lagerflansch 5 sowie ein Austrittsflansch 6 vorgesehen.

Das Innengehäuse 4 umfasst ein erstes Schalenbauteil 7 und ein zweites Schalenbauteil 8. Das erste Schalenbauteil 7 besteht aus einem Stahlgusswerkstoff erster Art, nämlich dem hitzebeständigen Stahlguss GX40NiCrSiNb38-19 (Nr. 1.4849). Das zweite Schalenbauteil 8 besteht aus einem Stahlgusswerkstoff zweiter Art, nämlich dem hitzebeständigen Stahlguss GX40CrNiSi25-12 (Nr. 1.4837). Die beiden Schalenbauteile 7, 8 sind in einer quer zur Längsachse LA des Turbinengehäuses 2 ausgerichteten Querebene QE aneinander gesetzt und über eine am Außenumfang 9 des Innengehäuses 4 umlaufende Fügenaht 10 miteinander verbunden.

Der Lagerflansch 5 ist materialeinheitlich einstückiger Bestandteil des ersten Schalenbauteils 7. Der Lagerflansch 5 weist einen Stutzenabschnitt 11 auf, in dem eine innenliegende Lageraufnahme 12 ausgebildet ist. Die Lageraufnahme 12 dient zur Aufnahme eines Lagers für die Welle des Turbinenrades.

Außenseitig weist der Lagerflansch 5 einen umlaufenden Steg 13 auf. Benachbart zum Steg 13 ist eine Nut 14 ausgebildet. Über den Steg 13 ist das Außengehäuse 3 mit dem Lagerflansch 5 mittels einer stoffschlüssigen Fügung 15 verbunden, insbesondere durch eine Laserschweißnaht oder eine Lötverbindung. Das Außengehäuse 3 selbst ist aus einer Oberschale 16 und einer Unterschale 17 zusammengesetzt, die einander gegenüberliegend in die Nut 14 eingreifen und mit dem Steg 13 gefügt sind.

Der Fügebereich zwischen Außenschale 3 und Lagerflansch 5 zählt zu den am höchsten belasteten Zonen des Turbinengehäuses 2. Hier treten hohe Biegemomente infolge von Temperaturwechseln auf. Durch den Einsatz des Stahlgusswerkstoffes Nr. 1.4849 mit seinem Nickelanteil von 36 % bis 39 % weist der hochbelastete Flanschbereich eine gesteigerte thermische und dynamische Festigkeit auf. Hierdurch kann die Dauerfestigkeit des Turbinengehäuses 2 gesteigert werden. Der Stahlgusswerkstoff Nr. 14837 ist deutlich niedriger legiert mit einem Nickelanteil von 11 % bis 14 %. Dementsprechend ist das zweite Schalenbauteil 8 aus diesem Stahlgusswerkstoff Nr. 14837 kostengünstiger.

An den Lagerflansch 5 schließt sich über einen Übergangsabschnitt 18 ein radial aufgerichteter Wandabschnitt 19 des ersten Schalenbauteils 7 an. Der Wandabschnitt 19 geht über einen Bogenabschnitt 20 in einen in Richtung der Längsachse LA des Turbinengehäuses 2 gerichteten Kranzabschnitt 21 über. Mit dem Kranzabschnitt 21 ist das erste Schalenbauteil 7 stumpf an den äußeren Randabschnitt 22 des zweiten Schalenbauteils 8 angesetzt und stoffschlüssig entlang der Fügenaht 10 mit diesem verbunden.

Man erkennt des Weiteren, dass das Außengehäuse 3 mit dem Austrittsflansch 6 verbunden ist. Das Innengehäuse 4 weist einen Auslassstutzen 23 auf, der über eine Gleitmanschette 24 und Klemmbauteile 25 mit einem Aufnahmestutzen 26 verbunden ist, der integrativer materialeinheitlich einstückiger Bestandteil des Austrittsflansches 6 ist.

### Bezugszeichen:

- 1 -: Abgaskrümmer
- 2 -: Turbinengehäuse
- 3 -: Außengehäuse
- 4 -: Innengehäuse
- 5 -: Lagerflansch
- 6 -: Austrittsflansch
- 7 -: erstes Schalenbauteil
- 8 -: zweites Schalenbauteil
- 9 -: Außenumfang von 4
- 10 -: Fügenaht
- 11 -: Stutzenabschnitt
- 12 -: Lageraufnahme
- 13 -: Steg
- 14 -: Nut
- 15 -: Fügung
- 16 -: Oberschale
- 17 -: Unterschale
- 18 -: Übergangsabschnitt
- 19 -: Wandabschnitt
- 20 -: Bogenabschnitt
- 21 -: Kranzabschnitt
- 22 -: Randabschnitt
- 23 -: Auslassstutzen
- 24 -: Gleitmanschette
- 25 -: Klemmbauteil
- 26 -: Aufnahmestutzen

- QE -: Querebene
- LA -: Längsachse von 2

## Patentansprüche

1. Turbinengehäuse für einen Abgasturbolader, welches ein Außengehäuse (3) und ein Innengehäuse (4) sowie einen Lagerflansch (5) aufweist, wobei das Außengehäuse (3) mit dem Lagerflansch (5) gefügt ist, wobei das Innengehäuse (4) ein erstes Schalenbauteil (7) und ein zweites Schalenbauteil (8) umfasst, welche miteinander gefügt sind, **dadurch gekennzeichnet, dass** die beiden Schalenbauteile (7, 8) aus verschiedenen Stahlgusswerkstoffen bestehen, wobei die beiden Schalenbauteile (7, 8) in einer quer zur Längsachse (LA) des Turbinengehäuses (2) ausgerichteten Querebene (QE) aneinander gesetzt und über eine am Außenumfang (9) des Innengehäuses (4) umlaufende Fügenaht (10) miteinander verbunden sind und der Lagerflansch (5) materialeinheitlich einstückiger Bestandteil des ersten Schalenbauteils (7) ist.

2. Turbinengehäuse nach Anspruch 1, **dadurch gekennzeichnet, dass** der Lagerflansch (5) einen außenseitig umlaufenden Steg (13) aufweist, über welchen das Außengehäuse (3) mit dem Lagerflansch (5) gefügt ist.

3. Turbinengehäuse nach Anspruch 1 oder 2, **dadurch gekennzeichnet, dass** der Lagerflansch (5) einen Stutzenabschnitt (11) mit einer innenliegenden Lageraufnahme (15) aufweist.

4. Turbinengehäuse nach einem der Ansprüche 1 bis 3, **dadurch gekennzeichnet, dass** der Stahlgusswerkstoff des ersten Schalenbauteils (7) als Legierungsbestandteil Nickel (Ni) enthält und der Stahlgusswerkstoff des zweiten Schalenbauteils (8) als Legierungsbestandteil Nickel (Ni) enthält, wobei das Verhältnis des Nickelanteils im ersten Schalenbauteils (7) zum Nickelanteil im zweiten Schalenbauteils (8) zwischen 1,5:1 und 15:1 bemessen ist.

5. Turbinengehäuse nach einem der Ansprüche 1 bis 4, **dadurch gekennzeichnet, dass** der Längenausdehnungskoeffizient des Stahlgusswerkstoffs des ersten Schalenbauteils (7) und der Längenausdehnungskoeffizient des Stahlgusswerkstoffs des zweiten Schalenbauteils (8) jeweils gemessen bei einer Temperatur von 800°C einander entsprechen mit einer Abweichung von +/- 10 %.

6. Turbinengehäuse nach einem der Ansprüche 1 bis 5, **dadurch gekennzeichnet, dass** das erste Schalenbauteil (7) aus dem hitzebeständigen Stahlguss GX40NiCrSiNb38-19 (Nr. 1.4849) besteht und das zweite Schalenbauteil (8) aus dem hitzebeständigen Stahlguss GX40CrNiSi25-12 (Nr. 1.4837) besteht.

7. Turbinengehäuse nach einem der Ansprüche 1 bis 5, **dadurch gekennzeichnet, dass** das erste Schalenbauteil (7) aus dem hitzebeständigen Stahlguss GX40CrNiSi25-20 (Nr. 1.4848) besteht und das zweite Schalenbauteil (8) aus dem hitzebeständigen Stahlguss GX40CrNiSi25-12 (Nr. 1.4837) besteht.

## Claims

1. Turbine housing for an exhaust gas turbocharger, which has an outer housing (3) and an inner housing (4) as well as a bearing flange (5), wherein the outer housing (3) is joined to the bearing flange (5), wherein the inner housing (4) comprises a first shell component (7) and a second shell component (8), which are joined to one another, **characterised in that** the two shell components (7, 8) are made of different cast steel materials, wherein the two shell components (7, 8) are placed side by side in a transverse plane (QE), which is oriented transversely to the longitudinal axis (LA) of the turbine housing (2), and are connected to one another by means of a circumferential joint seam (10) on the outer periphery (9) of the inner housing (4) and the bearing flange (5) is a one-piece part, made of uniform material, of the first shell component (7).

2. Turbine housing according to claim 1, **characterised in that** the bearing flange (5) has an external circumferential web (13), by means of which the outer housing (3) is joined to the bearing flange (5).

3. Turbine housing according to claim 1 or 2, **characterised in that** the bearing flange (5) has a connector section (11) with an internal bearing mount (15).

4. Turbine housing according to any of claims 1 to 3, **characterised in that** the cast steel material of the first shell component (7) contains nickel (Ni) as an alloy constituent, and the cast steel material of the second shell component (8) contains nickel (Ni) as an alloy constituent, wherein the ratio of the nickel content in the first shell component (7) to the nickel content in the second shell component (8) is calculated to be between 1.5:1 and 15:1.

5. Turbine housing according to any of claims 1 to 4, **characterised in that** the coefficient of linear thermal expansion of the cast steel material of the first shell component (7) and the coefficient of linear thermal expansion of the cast steel material of the second shell component (8), measured respectively at a temperature of 800 °C, correspond to each other with a deviation of +/- 10 %.

6. Turbine housing according to any of claims 1 to 5, **characterised in that** the first shell component (7) is made of the heat-resistant cast steel GX40NiCrSiNb38-19 (no. 1.4849), and the second shell component (8) is made of the heat resistant cast steel GX40CrNiSi25-12 (no. 1.4837).

7. Turbine housing according to any of claims 1 to 5, **characterised in that** the first shell component (7) is made of the heat-resistant cast steel GX40CrNiSi25-20 (no. 1.4848) and the second shell component (8) is made of the heat-resistant cast steel GX40CrNiSi25-12 (no. 1.4837).

## Revendications

1. Carter de turbine pour un turbocompresseur, qui comporte un carter externe (3) et un carter interne (4) ainsi qu'une collerette d'appui (5), dans lequel le carter externe (3) est jointé avec la collerette d'appui (5), dans lequel le carter interne (4) comprend un premier élément de coque (7) et un second élément de coque (8) qui sont jointés l'un avec l'autre, **caractérisé en ce que** les deux éléments de coque (7, 8) sont en des aciers moulés différents, dans lequel les deux éléments de coque (7, 8) sont placés l'un contre l'autre dans un plan transversal (QE) orienté transversalement par rapport à l'axe longitudinal (LA) du carter de turbine (2) et sont assemblés l'un à l'autre par l'intermédiaire d'un joint d'assemblage (10) faisant le tour de la périphérie extérieure (9) du carter interne (4) et la collerette d'appui (5) est une partie constituante, d'un seul tenant et du même matériau, du premier élément de coque (7).

2. Carter de turbine selon la revendication 1, **caractérisé en ce que** la collerette d'appui (5) comporte une traverse (13) périphérique extérieure par l'intermédiaire de laquelle le carter externe (3) est jointé avec la collerette d'appui (5).

3. Carter de turbine selon la revendication 1 ou 2, **caractérisé en ce que** la collerette d'appui (5) comporte une partie de raccordement (11) avec un logement d'appui (15) situé à l'intérieur.

4. Carter de turbine selon l'une quelconque des revendications 1 à 3, **caractérisé en ce que** l'acier moulé du premier élément de coque (7) contient comme constituant d'alliage du nickel (Ni) et l'acier moulé du second élément de coque (8) contient comme constituant d'alliage du nickel (Ni), le rapport de la teneur en nickel dans le premier élément de coque (7) à la teneur en nickel dans le second élément de coque (8) étant compris entre 1,5:1 et 15:1.

5. Carter de turbine selon l'une quelconque des revendications 1 à 4, **caractérisé en ce que** le coefficient de dilatation thermique de l'acier du premier élément de coque (7) et le coefficient de dilatation thermique de l'acier du second élément de coque (8), mesurés chacun à une température de 800 °C, correspondent l'un à l'autre avec un écart de +/- 10 %.

6. Carter de turbine selon l'une quelconque des revendications 1 à 5, **caractérisé en ce que** le premier élément de coque (7) est en acier moulé réfractaire GX40NiCrSiNb38-19 (Nr. 1.4849) et le second élément de coque (8) est en acier moulé réfractaire GX40CrNiSi25-12 (Nr. 1.4837).

7. Carter de turbine selon l'une quelconque des revendications 1 à 5, **caractérisé en ce que** le premier élément de coque (7) est en acier moulé réfractaire GX40CrNiSi25-20 (Nr. 1.4848) et le second élément de coque (8) est en acier moulé réfractaire GX40CrNiSi25-12 (Nr. 1.4837).
